# EUROPÄISCHE PATENTSCHRIFT

(11) **EP 2 888 386 B1**
(45) Veröffentlichungstag und Bekanntmachung des Hinweises auf die Patenterteilung: **15.06.2016**
(21) Anmeldenummer: 13748305.3
(22) Anmeldetag: 12.08.2013
(51) Int. Cl.: C23C 22/02, C09D 5/00, C09D 5/02, C09D 5/04, C10M 171/00, C10L 1/10, C10L 1/222, C10L 10/04, C10M 133/08, C23F 11/10, C23C 22/60, C23F 11/08, C09K 8/28, C09K 8/36, C09K 8/54

(54) **KORROSIONSSCHUTZMITTEL-FORMULIERUNG ZUM SCHUTZ VOR ZINK- UND CADMIUMKORROSION**
ANTI-CORROSION AGENT FORMULATION FOR PROTECTING AGAINST ZINC CORROSION AND CADMIUM CORROSION
FORMULATION D'AGENT ANTICORROSIF DESTINÉE À LA PROTECTION DU ZINC ET DU CADMIUM CONTRE UNE CORROSION

(30) Priorität: 22.08.2012 EP 12181274
(43) Veröffentlichungstag der Anmeldung: 01.07.2015
(73) Patentinhaber: BASF SE, 67056 Ludwigshafen am Rhein (DE)
(72) Erfinder: DIETL, Harald, 67063 Ludwigshafen (DE); NITZSCHKE, Uwe, 67071 Ludwigshafen (DE)
(74) Vertreter: BASF IP Association
(86) Internationale Anmeldenummer: PCT/EP2013/066823
(87) Internationale Veröffentlichungsnummer: WO 2014/029654

(56) Entgegenhaltungen:
- EP-A1- 0 414 398
- WO-A1-2004/099350
- US-A- 2 776 870
- US-B1- 6 866 797

## Beschreibung

Die vorliegende Erfindung betrifft eine neue Korrosionsschutzmittel-Formulierung sowie ein Verfahren zum Schutz vor Zink- und Cadmiumkorrosion durch Verwendung dieser Korrosionsschutzmittel-Formulierung.

Jedes Jahr entstehen an Winterdienstfahrzeugen auf Flughäfen durch den Einsatz der global verwendeten stark alkalisch reagierenden Landebahnenteisungsmittel auf Basis von Alkalimetallacetaten und Alkalimetallformiaten Korrosionsschäden an verzinkten Bauteilen. Die eingesetzten Schneepflüge, Streufahrzeuge, Flugzeugenteisungsfahrzeuge und Kehrblasgeräte müssen daher oft gewartet und repariert werden und haben eine nur begrenzte Lebensdauer. Auch verzinkte und cadmierte Bauteile und Oberflächen der startenden und landenden Flugzeuge unterliegen durch die stark alkalisch reagierenden Landebahnenteisungsmittel auf Basis von Alkalimetallacetaten und Alkalimetallformiaten erhöhter Korrosion.

Korrosionsschutzmittel-Formulierung sind für den Dampfraumkorrosionsschutz beim Einlaufen von Fahrzeugmotoren bekannt, beispielsweise aus der WO 2012/063164 A1 (1). Das Dokument (1) beschreibt eine thixotrope Formulierung aus Ethylenoxid- oder Propylenoxid-Blockcopolymeren als Tenside, Rizinusölethoxylaten, Alkanolaminen, organischen Carbonsäuren und Triazolen als Korrosionsinhibitoren, Polyacrylat-Verdickern und Monopropylenglykol. Es ist bekannt eine Formulierung aus Alkylaminethoxylaten als Tenside, Rizinusölethoxylaten, organischen Carbonsäuren und Triazolen als Korrosionsinhibitoren, Polyacrylat-Verdickern und mindestens 75 Gew.-% Monopropylenglykol. Die genannten Formulierungen weisen jedoch keinen effizienten Zink- und Cadmium-Korrosionsschutz auf. Die Dokumente WO 2004/099350 und EP 0 414 398 Geschrieben ebenfalls Korrosionsschutzmittel-Formulierung für metallische Oberflächen.

Da es bislang keinen effizienten Korrosionsschutz für Zink und Cadmium gibt, müssen die beschriebenen Korrosionsschäden an Winterdienstfahrzeugen auf Flughäfen und an Flugzeugen in Kauf genommen werden. Weniger korrosionsverursachende modifizierte Landebahnenteisungsmittel können aufgrund der strengen Umweltauflagen für Landebahnenteisungsmittel auch nicht eingesetzt werden.

Es bestand daher die Aufgabe, eine effiziente Korrosionsschutzmittel-Formulierung bereitzustellen, welche insbesondere die Zink- und Cadmium-Korrosionsprobleme bei Winterdienstfahrzeugen auf Flughäfen und an Flugzeugen behebt.

Demgemäß wurde eine Korrosionsschutzmittel-Formulierung gefunden, welche
(A) 0,01 bis 5 Gew.-%, vorzugsweise 0,1 bis 3 Gew.-%, vor allem 0,5 bis 1,5 Gew.-% eines oder mehrerer Alkylaminethoxylate als Tensidkomponente,
(B) 0,01 bis 10 Gew.-%, vorzugsweise 0,5 bis 7 Gew.-%, vor allem 1 bis 5 Gew.-% eines oder mehrerer Korrosionsinhibitoren,
(C) 0 bis 0,3 Gew.-%, vorzugsweise 0,0001 bis 0,15 Gew.-%, vor allem 0,005 bis 0,05 Gew.-% eines oder mehrerer Verdicker,
(D) 5 bis weniger als 75 Gew.-%, vorzugsweise 10 bis 70 Gew.-%, vor allem 25 bis 55 Gew.-% eines oder mehrerer gefrierpunktserniedrigender Alkohole ausgewählt aus Alkanolen, Glykolen, Polyalkylenglykolen und Glycerin,
(E) 5 bis 90 Gew.-%, vorzugsweise 15 bis 80 Gew.-%, vor allem 35 bis 60 Gew.-% eines oder mehrerer pflanzlicher und/oder fetter Öle,
(F) 0 bis 5 Gew.-%, vorzugsweise 0,1 bis 4 Gew.-%, vor allem 0,5 bis 3 Gew.-% Wasser und
(G) 0 bis 5 Gew.-%, vorzugsweise 0,1 bis 4 Gew.-%, vor allem 0,5 bis 3 Gew.-% eines üblichen Emulgators.
enthält, wobei die Summe der Komponenten (A) bis (G) in allen Fällen 100 Gew.-% ergibt, und wobei es sich bei Komponente (B) um mindestens ein Rizinusölethoxylat oder eine Mischung aus wenigstens einem Rizinusölethoxylat und wenigstens einem weiteren Korrosionsinhibitor auf Basis organischen Carbonsäuren und/oder heterocyclischer Verbindungen handelt.

Die Komponenten (A) bis (G) sind in aller Regel die wesentlichen Komponenten der erfindungsgemäßen Korrosionsschutzmittel-Formulierung. Es können daneben in kleineren Menge weitere Komponenten wie weitere oberflächenaktive Verbindungen, die die Tensid-Wirkung von Komponente (A) unterstützen können, Entschäumer, Farbstoffen oder Duftstoffe mit enthalten sein, die jedoch keinen oder keinen wesentlichen Einfluss auf die korrosionsinhibierende Wirkung haben.

Ein entscheidendes Charakteristikum der erfindungsgemäßen Korrosionsschutzmittel-Formulierung ist ihre physikalische Konsistenz, die insbesondere auf der Mitverwendung von pflanzlichen und/oder fetten Ölen als Komponente (E) und der physikalischen Wechselwirkung der Komponente (E) mit dem Verdicker der Komponente (C) und dem Tensid der Komponente (A) beruht. Die erfindungsgemäße Korrosionsschutzmittel-Formulierung ist ausreichend fließfähig, so dass sie sich mit üblichen Techniken problemlos auftragen lässt, wobei eine gleichmäßige Bedeckung der zu schützenden Metalloberflächen erreicht wird, bleibt aber aufgrund ihrer Zähigkeit und ihrer teilweise thixotropen Eigenschaften auf den zu schützenden Metalloberflächen gut und lange haften, womit ein andauernder Schutz gewährleistet wird.

Der Alkylrest in den Alkylaminethoxylaten der Komponente (A) kann auf einem sekundären oder vorzugsweise auf einem primären Monoamin basieren, das ethoxylierbar ist. Normalerweise werden sekundäre oder vorzugsweise primäre aliphatische Monoamine eingesetzt; es können jedoch auch Polyamine mit wenigstens einer sekundären und/oder primären Aminogruppe, die ethoxylierbar ist, eingesetzt werden. Der Alkylrest am Stickstoffatom umfasst üblicherweise gesättigte lineare oder gesättigte verzweigte Alkylgruppen; der Begriff "Alkyl" kann hier jedoch auch ungesättigte lineare, ungesättigte verzweigte oder gesättigte oder ungesättigte cyclische Kohlenwasserstoffgruppen bedeuten.

In einer bevorzugten Ausführungsform enthält die erfindungsgemäße Korrosionsschutzmittel-Formulierung als Komponente (A) mindestens ein Alkylaminethoxylat, welches wenigstens einen linearen oder verzweigten C₃- bis C₂₀-Alkylrest, vor einen linearen oder verzweigten C₆- bis C₁₃-Alkylrest, insbesondere einen linearen oder verzweigten C₇- bis C₁₂-Alkylrest, vor allem einen linearen oder verzweigten C₈- bis C₁₁-Alkylrest, enthält. Vorzugsweise bedeutet der Begriff "Alkyl" hier in diesem Zusammenhang eine gesättigte und nicht-cyclische Kohlenwasserstoffgruppe. Die Alkylamin-ethoxylate können auch Mischungen solcher Alkylreste enthalten, beispielsweise eine Mischung homologer Alkylreste, abhängig vom speziellen technischen oder natürlichen Ursprung der verwendeten Alkylamine.

Geeignete Beispiele für einzelne Alkylamine, die ethoxylierbar und dann in dieser Form als tensidische Komponente (A) für die erfindungsgemäße Korrosionsschutzmittel-For-mulierung einsetzbar sind, sind n-Propylamin, iso-Propylamin, n-Butylamin, iso-Butyl-amin, sek.-Butylamin, tert.-Butylamin, n-Pentylamin, tert.-Pentylamin, n-Hexylamin, n-Heptylamin, n-Octylamin, 2-Ethylhexylamin, n-Nonylamin, n-Decylamin, 2-Propylheptyl-amin, n-Undecylamin, n-Dodecylamin, n-Tridecylamin, iso-Tridecylamin, n-Tetradecyl-amin, n-Pentadecylamin, n-Hexadecylamin, n-Heptadecylamin, n-Octadecylamin, n-Nonadecylamin, n-Eicosylamin, Di-(n-hexyl)amin, Di-(n-heptyl)amin, Di-(n-octyl)amin, Di-(2-ethylhexyl)amin, Di-(n-nonyl)amin, Di-(n-decyl)amin, Di-(2-propylheptyl)amin, Di-(n-undecyl)amin, Di-(n-dodecyl)amin, Di-(n-tridecyl)amin, Di-(iso-tridecyl)amin, Di-(n-tetradecyl)amin, Di-(n-pentadecyl)amin, Di-(n-hexadecyl)amin, Di-(n-heptadecyl)amin, Di-(n-octadecyl)amin, Di-(n-nonadecyl)amin, Di-(n-eicosyl)amin, n-Hexylmethylamin, n-Heptylmethylamin, n-Octylmethylamin, (2-Ethylhexyl)methylamin, n-Nonylmethylamin, n-Decylmethylamin, (2-Propylheptyl)methylamin, n-Undecylmethylamin, n-Dodecyl-methylamin, n-Tridecylmethylamin, iso-Tridecylmethylamin, n-Tetradecylmethylamin, n-Pentadecylmethylamin, n-Hexadecylmethylamin, n-Heptadecylmethylamin, n-Octade-cylmethylamin, n-Nonadecylmethylamin und n-Eicosylmethylamin.

Die Alkylreste in den Alkylaminethoxylaten können vollständig aus der Herstellung der entsprechenden Vorprodukte durch petrochemische Verfahren stammen, z. B. technische C₈- bis C₁₅-Alkylmischungen, 2-Ethylhexyl oder 2-Propylheptyl, oder können teilweise oder vollständig auf nachwachsenden Rohstoffen basiert sein, z. B. Fettaminen wie Stearylamin, Oleylamin oder Talgfettamin.

In einer bevorzugten Ausführungsform enthält die erfindungsgemäße Korrosionsschutzmittel-Formulierung als Komponente (A) mindestens ein Alkylaminethoxylat, welches 1 bis 35 Ethylenoxid-Einheiten, bezogen auf das Alkylamin-Molekül, enthält. Noch stärker bevorzugt beträgt dieser Ethoxylierungsgrad 1,5 bis 15, insbesondere 1,8 bis 9, vor allem 2 bis 6 Ethylenoxid-Einheiten pro Alkylamin-Molekül. Dieser Ethoxylierungsgrad ist ein statistischer Wert, d. h. die Alkylaminethoxylate müssen normalerweise als Mischungen von Verbindungen (Homologen) mit unterschiedlicher Anzahl von Ethylenoxid-Einheiten angesehen werden.

In einer besonders bevorzugten Ausführungsform enthält die erfindungsgemäße Korrosionsschutzmittel-Formulierung als Komponente (A) mindestens ein Alkylaminetho-xylat, welches wenigstens einen linearen C₃- bis C₂₀-Alkylrest und 1 bis 35 Ethylenoxid-Einheiten, stärker bevorzugt wenigstens einen linearen C₆- bis C₁₃-Alkylrest und 1,5 bis 15 Ethylenoxid-Einheiten, insbesondere wenigstens einen linearen C₇- bis C₁₂-Alkylrest und 1,8 bis 9 Ethylenoxid-Einheiten, vor allem wenigstens einen linearen C₈- bis C₁₁-Alkylrest und 2 bis 6 Ethylenoxid-Einheiten, enthält.

Die genannten Alkylaminethoxylate können primäre Amine mit einer Oxyethylen-Kette der allgemeinen Formel Alkyl-NH-(CH₂CH₂O)ₘ-H oder primäre Amine mit zwei Oxy-ethylen-Ketten der allgemeinen Formel Alkyl-N[(CH₂CH₂O)ₚ-H][(CH₂CH₂O)_{q}-H] oder sekundäre Amine der allgemeinen Formel (Alkyl)₂N-(CH₂CH₂O)ₘ-H oder Mischungen solcher primären Amine mit einer Oxyethylen-Kette mit solchen primären Aminen mit zwei Oxyethylen-Ketten oder Mischungen solcher primären ethoxylierten Amine mit solchen sekundären ethoxylierten Aminen sein, wobei m bzw. (p+q) die Gesamtethoxylierungsgrade bezeichnen. Restmengen an nicht ethoxylierten Alkylaminen können in den Alkylaminethoxylaten in kleineren Mengen zugegen sein, insbesondere bei niedrigen Gesamtethoxylierungsgraden von kleiner als 2.

Ein typisches in der erfindungsgemäßen Korrosionsschutzmittel-Formulierung einsetzbares Alkylaminethoxylat ist Octylamin (Caprylamin) mit 2 Ethylenoxid-Einheiten, welches kommerziell erhältlich ist.

Die genannten Alkylaminethoxylate können durch übliche Methoden hergestellt werden, beispielsweise durch Umsetzung der Alkylamine mit Ethylenoxid unter Alkalimetallhydroxid-Katalyse oder unter Doppelmetallcyanid-Katalyse, beide Methoden sind dem Fachmann bekannt.

Sollten weitere oberflächenaktive Verbindungen, die die Tensid-Wirkung von Komponente (A) unterstützen, in der erfindungsgemäßen Korrosionsschutzmittel-Formulierung mitverwendet werden, können diese beispielsweise aus den in Dokument (1) aufgelisteten oberflächenaktiven Verbindungen ausgewählt werden. Derartige zusätzliche oberflächenaktive Verbindungen können anionische, kationische oder nichtionische Tenside sein.

Besonders geeignete zusätzliche nichtionische Tenside basieren auf Polyethern. Neben den ungemischten Polyalkylenoxiden, bevorzugt C₂-C₄-Alkylenoxiden und phenylsubstituierten C₂-C₄-Alkylenoxiden, insbesondere Polyethylenoxiden, Polypropylenoxiden und Poly(phenylethylenoxiden), sind hier vor allem Blockcopolymerisate, insbesondere Polypropylenoxid- und Polyethylenoxidblöcke oder Poly(phenylethylenoxid)- und Polyethylenoxidblöcke aufweisende Polymerisate, und auch statistische Copolymerisate dieser Alkylenoxide geeignet.

Diese Polyalkylenoxide können durch Polyaddition der Alkylenoxide an Startermoleküle, wie an gesättigte oder ungesättigte aliphatische und aromatische Alkohole, gesättigte oder ungesättigte aliphatische und aromatische Amine, gesättigte oder ungesättigte aliphatische Carbonsäuren und Carbonsäureamide hergestellt werden. Üblicherweise werden 1 bis 300 mol, bevorzugt 3 bis 150 mol, Alkylenoxid je mol Startermolekül eingesetzt.

Geeignete aliphatische Alkohole enthalten dabei in der Regel 6 bis 26 C-Atome, bevorzugt 8 bis 18 C-Atome, und können unverzweigt, verzweigt oder cyclisch aufgebaut sein. Als Beispiele seien Octanol, Nonanol, Decanol, Isodecanol, Undecanol, Dodecanol, 2-Butyloctanol, Tridecanol, Isotridecanol, Tetradecanol, Pentadecanol, Hexadecanol (Cetylalkohol), 2-Hexyldecanol, Heptadecanol, Octadecanol (Stearylalkohol), 2-Heptylundecanol, 2-Octyldecanol, 2-Nonyltridecanol, 2-Decyltetradecanol, Oleylalkohol und 9-Octadecenol sowie auch Mischungen dieser Alkohole, wie C₈/C₁₀-, C₁₃/C₁₅- und C₁₆/C₁₈-Alkohole, und Cyclopentanol und Cyclohexanol genannt. Von besonderem Interesse sind die gesättigten und ungesättigten Fettalkohole, die durch Fettspaltung und Reduktion aus natürlichen Rohstoffen gewonnen werden, und die synthetischen Fettalkohole aus der Oxosynthese. Die Alkylenoxidaddukte an diese Alkohole weisen üblicherweise mittlere Molekulargewichte Mₙ von 200 bis 5 000 auf.

Als Beispiele für die obengenannten aromatischen Alkohole seien neben unsubstituiertem Phenol und α- und β-Naphthol auch die alkylsubstituierten Produkte, die insbesondere durch C₁-C₁₂-Alkyl, vorzugsweise C₄-C₁₂- bzw. C₁-C₄-Alkyl, substituiert sind, wie Hexylphenol, Heptylphenol, Octylphenol, Nonylphenol, Isononylphenol, Undecylphenol, Dodecylphenol, Di-und Tributylphenol und Dinonylphenol, sowie Bisphenol A und seine Umsetzungsprodukte mit Styrol, vor allem in den ortho-Positionen zu beiden OH-Gruppen durch insgesamt 4 Phenyl-1-ethylreste substituiertes Bisphenol A, genannt.

Geeignete aliphatische Amine entsprechen den oben aufgeführten aliphatischen Alkoholen. Besondere Bedeutung haben auch hier die gesättigten und ungesättigten Fettamine, die vorzugsweise 14 bis 20 C-Atome aufweisen. Als aromatische Amine seien beispielsweise Anilin und seine Derivate genannt.

Als aliphatische Carbonsäuren eignen sich insbesondere gesättigte und ungesättigte Fettsäuren, die bevorzugt 14 bis 20 C-Atome enthalten, und hydrierte, teilhydrierte und unhydrierte Harzsäuren sowie auch mehrwertige Carbonsäuren, z.B. Dicarbonsäuren, wie Maleinsäure. Geeignete Carbonsäureamide leiten sich von diesen Carbonsäuren ab.

Neben den Alkylenoxidaddukten an die einwertigen Amine und Alkohole sind die Alkylenoxidaddukte an mindestens bifunktionelle Amine und Alkohole von ganz besonderem Interesse.

Als mindestens bifunktionelle Amine sind zwei- bis fünfwertige Amine bevorzugt, die insbesondere der Formel H₂N-(R¹-NR²)ₙ-H (R¹ = C₂-C₆-Alkylen; R² = Wasserstoff oder C₁-C₆-Alkyl; n = 1 bis 5) entsprechen. Im Einzelnen seien beispielhaft genannt: Ethy-lendiamin, Diethylentriamin, Triethylentetramin, Tetraethylenpentamin, Propylendiamin-1,3, Dipropylentriamin, 3-Amino-1-ethylenaminopropan, Hexamethylendiamin, Dihexa-methylentriamin, 1,6-Bis-(3-aminopropylamino)hexan und N-Methyldipropylentriamin, wobei Hexamethylendiamin und Diethylentriamin besonders bevorzugt sind und Ethy-lendiamin ganz besonders bevorzugt ist.

Vorzugsweise werden diese Amine zunächst mit Propylenoxid und anschließend mit Ethylenoxid umgesetzt. Der Gehalt der Blockcopolymerisate an Ethylenoxid liegt üblicherweise bei etwa 10 bis 90 Gew.-%.

Die Blockcopolymerisate auf Basis mehrwertiger Amine weisen in der Regel mittlere Molekulargewichte Mₙ von 1 000 bis 40 000, vorzugsweise 1 500 bis 30 000, auf.

Als mindestens bifunktionelle Alkohole sind zwei- bis fünfwertige Alkohole bevorzugt. Beispielsweise seien C₂-C₆-Alkylenglykole und die entsprechenden Di- und Polyalkylenglykole, wie Ethylenglykol, Propylenglykol-1,2 und -1,3, Butylenglykol-1,2 und -1,4, Hexylenglykol-1,6, Dipropylenglykol und Polyethylenglykol, Glycerin und Pentaerythrit genannt, wobei Ethylenglykol und Polyethylenglykol besonders bevorzugt und Propylenglykol und Dipropylenglykol ganz besonders bevorzugt sind.

Besonders bevorzugte Alkylenoxidaddukte an mindestens bifunktionelle Alkohole weisen einen zentralen Polypropylenoxidblock auf, gehen also von einem Propylenglykol oder Polypropylenglykol aus, das zunächst mit weiterem Propylenoxid und dann mit Ethylenoxid umgesetzt wird. Der Gehalt der Blockcopolymerisate an Ethylenoxid liegt üblicherweise bei 10 bis 90 Gew.-%.

Die Blockcopolymerisate auf Basis mehrwertiger Alkohole weisen im allgemeinen mittlere Molekulargewichte Mₙ von 1 000 bis 20 000, vorzugsweise 1 000 bis 15 000, auf.

Derartige Alkylenoxidblockcopolymerisate sind bekannt und im Handel zum Beispiel unter den Namen Tetronic^{®}, Pluronic^{®} und Pluriol^{®} (BASF) sowie Atlas^{®} (Uniquema) erhältlich.

Selbstverständlich können auch Mischungen mehrerer solcher zusätzlichen Tenside verwendet werden.

Bevorzugt werden Tenside ausgewählt, die möglichst wenig schäumen. Werden Tenside eingesetzt, die stark schäumen, ist es möglich, dieser Eigenschaft durch die Verwendung von Entschäumern entgegen zu wirken.

Geeignete Korrosionsinhibitoren der Komponente (B) sind gemäß Anspruch 1, die die Korrosion von metallischen Oberflächen oder metallischen Bauteilen, welche aus Zink und/oder Cadmium bestehen oder Zink und/oder Cadmium enthalten, potentiell verringern oder ganz unterbinden können.

Der Korrosionsinhibitor für die Komponenten (B) ist ethoxyliertes Rizinusöl. Besonders bevorzugt wird ein Rizinusölethoxylat, welches 2 bis 200 mol Ethylenoxid pro Mol enthält. Insbesondere enthält das Rizinusöl-ethoxylat 4 bis 100 mol Ethylenoxid pro Mol oder 5 bis 60 mol Ethylenoxid pro Mol. Durch den Alkoxylierungsgrad des Rizinusöls und gegebenenfalls das Verhältnis der unterschiedlichen Alkylenoxide können die Löslichkeiten und die Phaseninversionstemperatur beeinflusst werden.

Häufig enthält die erfindungsgemäße Korrosionsschutzmittel-Formulierung Zusätze, die den pH Wert stabilisieren und so ebenfalls zur Korrosionsinhibierung beitragen. Ein Beispiel eines solchen Zuatzes ist Borax.

Die Komponente (B) kann entweder nur aus einem Korrosionsinhibitor bestehen; häufiger umfasst sie aber eine Kombination verschiedener Korrosionsinhibitoren. Die erfindungsgemäße Korrosionsschutzmittel-Formulierung enthalt als Komponente (B) mindestens ein Rizinusölethoxylat oder eine Mischung aus wenigstens einem Rizinusölethoxylat und wenigstens einem weiteren Korrosionsinhibitor auf Basis organischer Carbonsäuren und/oder heterocyclischer Verbindungen.

Die organischen Carbonsäuren werden hierbei insbesondere aus der Gruppe der ali-phatischen C₄- bis C₁₂-Mono- und -Dicarbonsäuren, Benzoesäure und Benzoldicarbonsäuren sowie deren Salzen und Anhydriden ausgewählt. Beispiele für derartige organische Carbonsäuren sind Isononansäure, Bernsteinsäure, Adipinsäure, Sebacinsäure, Dodecansäure, Benzoesäure und deren Alkalimetall- und Ammoniumsalze sowie Phthalsäureanhydrid. Die Überführung der organischen Carbonsäuren in ihre Salze kann auch erst in der fertigen Korrosionsschutzmittel-Formulierung durch Zudosierung von beispielsweise wässriger Natron- oder Kalilauge erfolgen. Die heterocyclischen Verbindungen sind insbesondere die vorgenannten stickstoffheterocyclischen Verbindungen, vor allem Tolutriazol und Benzotriazol.

Als Verdicker der Komponente (C) sind in der Regel hochmolekulare Substanzen zu verstehen, die die Viskosität einer Flüssigkeit erhöhen. In der Regel weisen geeignete Verdicker als 0,5 gew.-%ige Lösung in Wasser bei 20°C eine Viskosität von mindestens 50 mPas, bevorzugt mindestens 500 mPas, besonders bevorzugt mindestens 2000 mPas und insbesondere mindestens bevorzugt 5000 mPas (bestimmt als dynamische Viskosität gemäß ASTM D 4016-08). Meist beträgt die Viskosität der wässrigen 0,5 gew.-%igen Lösung jedoch nicht mehr als 50 000 mPas.

Die Komponente (C) kann einen oder mehrere natürliche Verdicker oder vorzugsweise einen oder mehrere synthetische Verdicker oder Mischungen hiervon umfassen.

Die Wahl der Verdicker hängt von der Anwendung ab, dem gewünschten Viskositätsbereich, von der Anwendungstemperatur und von dem Lösungsmittelsystem, das verdickt werden soll. Die Art des Verdickers ist für die Ausführung der Erfindung nicht wesentlich, vorausgesetzt das Verdickersystem geht keine unerwünschte Wechselwirkung mit dem Korrosionsinhibitor, der zu schützenden metallischen Oberfläche oder den sonstigen gegebenenfalls enthaltenen Bestandteilen ein.

Beispiele geeigneter Verdicker sind zum Beispiel in Kittel, Lehrbuch der Lacke und Beschichtungen, Band 4, 2. Auflage 2007, S. 285 bis 316, aufgeführt.

Natürliche Verdicker sind solche Verdicker, die Naturprodukte sind oder durch Aufarbeitung wie beispielsweise Reinigungsoperationen, insbesondere Extraktion von Naturprodukten, erhalten werden können. Beispiele für anorganische natürliche Verdicker sind Schichtsilikate wie beispielsweise Bentonit. Beispiele für organische natürliche Verdicker sind vorzugsweise Proteine wie beispielsweise Casein oder bevorzugt Polysaccharide. Besonders bevorzugte natürliche Verdicker sind gewählt aus Agar-Agar, Carrageen, Gummi arabicum, Alginaten wie beispielsweise Natriumalginat, Kaliumalginat, Ammoniumalginat, Calciumalginat und Propylengycolalginat, Pektinen, Polyosen, Johannisbrotbaum-Kernmehl (Carubin) und Dextrinen.

Bevorzugt ist generell jedoch der Einsatz von synthetischen Verdickern. Geeignet sind zum Beispiel teilhydrolysierte Polymerisate und Copolymerisate von Vinylacetat. Bevorzugt weisen diese einen Hydrolysegrad von 70 bis 97 % auf. Besonders bevorzugt werden partiell hydrolysierte Polyvinylalkohole sowie Polyvinyalkohol selbst.

Unter Copolymerisaten von Vinylacetat werden als Verdicker insbesondere voll- oder teilverseifte Vinylalkohol-Copolymerisate verstanden, insbesondere vollverseifte Copolymere aus Alkylvinylester und Vinylacetat mit einem Anteil an Alkylvinylester von vorzugsweise 5 bis 20 mol-%, ganz besonders Copolymere aus Alkylvinylacetat und Vinyl-acetat. Weiterhin kommen als Verdicker Homo- und Copolymerisate von N-Vinylpyrro-lidon in Betracht.

Weitere geeignete Verdicker sind Homopolymere und Copolymere von Acrylsäure und Methacrylsäure sowie deren Salze, Ester der Acrylsäure oder Methacrylsäure, Acryl-amid, Vinylpyrro-lidon, Alkylenoxide wie Polyethylenoxide, Styrol-Maleinsäureanhydrid-Copolymerisate sowie deren Salze.

In einer bevorzugten Ausführungsform enthält die erfindungsgemäße Korrosionsschutzmittel-Formulierung als Komponente (C) mindestens ein Polyacrylat als synthetischen Verdicker, wobei im Rahmen der vorliegenden Erfindung unter Polyacrylat sowohl Homopolymere als auch Copolymere der Acrylsäure verstanden werden sollen. Derartige Polyacrylate können auch Acrylamid und/oder Methacrylsäure oder deren Derivate einpolymerisiert enthalten. In der Regel sind derartige Polyacrylate nicht oder nur schwach vernetzt.

Ganz besonders bevorzugte synthetische Verdicker sind gewählt aus Copolymeren, die 85 bis 95 Gew.-% Acrylsäure, 4 bis 14 Gew.-% Acrylamid und 0,01 bis 1 Gew.-% des (Meth)acrylamid-Derivates der Formel 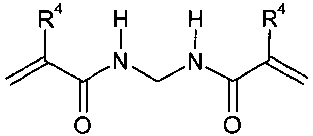 enthalten, in denen die Reste R⁴ verschieden oder gleich sein und Methyl oder Wasserstoff bedeuten können.

Geeignete synthetische Verdicker haben in der Regel Molekulargewichte M_{w} im Bereich von 50 000 bis 3.000.000 g/mol, bevorzugt 100.000 bis 2.000.000 g/mol, besonders bevorzugt 200.000 bis 1.000.000 g/mol (bestimmt mittels Gelpermeationschromatographie mit Polystyrol als Standard).

In der Regel sind als Komponenten (C) geeignete Verdicker als Substanz fest. Sie können jedoch als Lösung oder als Dispersion, zum Beispiel in Wasser, eingesetzt werden.

Es ist zwar wünschenswert aber nicht unbedingt notwendig, dass die verwendeten Verdicker sich bei Raumtemperatur vollständig in den übrigen Bestandteilen der erfindungsgemäßen Korrosionsschutzmittel-Formulierung lösen. Die erfindungsgemäße Korrosionsschutzmittel-Formulierung ist auch dann effektiv, wenn sie mehrere Phasen aufweist. Jedoch ist es vorteilhaft, wenn sich die verwendeten Verdicker gut in die erfindungsgemäße Korrosionsschutzmittel-Formulierung einrühren lassen. Das Einrühren der Verdicker geschieht häufig bei leicht saurem pH-Wert, zum Beispiel bei pH 3 bis 4.

Weiterhin sind als Verdicker sogenannte Assoziativverdicker geeignet. Assoziativverdicker enthalten neben hydrophilen Gruppen auch hydrophobe End- oder Seitengruppen im Molekül. Assoziativverdicker haben Tensid-Charakter und sie sind in der Regel zur Bildung von Micellen fähig.

Geeignete Assoziativverdicker sind zum Beispiel hydrophob modifizierte Polyacrylate, hydrophob modifizierte Celluloseether, hydrophob modifizierte Polyacrylamide, hydrophob modifizierte Polyether, oder assoziative Polyurethan-Verdicker bestehend aus über Urethan-Gruppen verknüpften hydrophilen, relativ hochmolekularen Polyether-Segmenten, verkappt mit mindestens zwei endständigen, hydrophoben Molekülgruppen.

Der Verdicker der Komponente (C), insbesondere der Polyacrylat-Verdicker, und das Alkylaminethoxylat-Tensid der Komponente (A) und gegebenenfalls weitere oberflächenaktive Substanzen, die die Tensid-Wirkung von (A) unterstützen, sind als wechselwirkendes System zu betrachten, welches nicht-Newtonsche Eigenschaften (thixotrope Eigenschaften) in der erfindungsgemäßen Korrosionsschutzmittel-Formulierung bewirken kann.

Als gefrierpunktserniedrigende Alkohole der Komponente (D) kommen Alkanole wie Ethanol, n-Propanol, iso-Propanol, n-Butanol, iso-Butanol, sec.-Butanol, tert.-Butanol oder n-Pentanol, Glykole wie Monoethylenglykol oder Monopropylenglykol, Polyalkylenglykole wie Diethylenglykol, Triethylenglykol, Tetraethylenglykol, Polyethylenglykole, Dipropylenglykol, Tripropylenglykol, Tetrapropylenglykol oder Polypropylenglykole, wobei derartige Polyalkylenglykole an einem Ende verethert sein können, und Glycerin sowie deren Mischungen in Betracht.

In einer bevorzugten Ausführungsform enthält die erfindungsgemäße Korrosionsschutzmittel-Formulierung als Komponente (D) Monopropylenglykol oder eine Mischung aus Monopropylenglykol und einem oder mehreren anderen gefrierpunktserniedrigenden Alkoholen ausgewählt aus Alkanolen, Glykolen, Polyalkylenglykolen und Glycerin.

Die pflanzlichen und fetten Öle der Komponente (E) dienen in der erfindungsgemäßen Korrosionsschutzmittel-Formulierung hauptsächlich zur Herstellung der erforderlichen physikalischen Konsistenz, welche zur Handhabbarkeit und zur effektiven Schutzwirkung notwendig ist. Pflanzliche Öle (auch als Pflanzenöle bezeichnet) und fette Öle (auch als Neutralfette bezeichnet) sind aus Ölpflanzen gewonnene Öle. Ausgangsstoffe zur Herstellung von pflanzlichen Ölen und fetten Ölen sind Ölsaaten und Ölfrüchte, in denen das Öl in der Regel in Form von Lipiden vorliegt. Pflanzliche Öle sind vorwiegend Ester des Glycerins mit gestättigten und/oder ungesättigten Fettsäuren, sogenannte Triglyceride. Bespiele für pflanzliche Öle sind Avocadoöl, Erdnussöl, Sonnenblumenöl, Palmkernfett, Rapsöl, Olivenöl, Mohnöl und Sojaöl.

Nach dem Anteil an ungesättigten Fettsäuren unterscheidet man zwischen nichttrocknenden (z. B. Olivenöl), halbtrocknenden (z. B. Sojaöl und Rapsöl) und trocknenden pflanzlichen Ölen (z. B. Leinöl oder Mohnöl). Der Begriff "Trocknung" bezeichnet hierbei nicht Verdunstung, sondern das durch Oxidation mit Sauerstoff und anschließende Polymerisation der ungesättigten Fettsäuren bedingte Verdicken ("Verharzen") des Öls. Somit haben trocknende Öle den höchsten Gehalt an ungesättigten Fettsäuren. Für die vorliegende Erfindung werden solche trocknenden pflanzlichen Öle und fette Öle, insbesondere solche mit einem Gehalt an Ölsäure, Linolsäure und Linolensäure von zusammen mehr als 50 Gew.-%, vor allem mehr als 70 Gew.-%, bezogen auf den Gesamtgehalt an Fettsäuren im Öl, bevorzugt.

In einer bevorzugten Ausführungsform enthält die erfindungsgemäße Korrosionsschutzmittel-Formulierung als Komponente (E) Leinöl, welches aufgrund des seines hohen Gehaltes an Ölsäure (10 bis 22 Gew.-%), Linolsäure (12 bis 18 Gew.-%) und Linolensäure (56 bis 71 Gew.-%) (jeweils bezogen auf den Gesamtgehalt an Fettsäuren im Leinöl) leicht aushärtet und dadurch für eine langwährende Haftung der erfindungsgemäße Korrosionsschutzmittel-Formulierung auf den vor Zink- und Cadmiumkorrosion zu schützenden Metalloberflächen sorgt.

Besonders bevorzugt wird Lackleinöl (auch Leinölfirnis genannt), welches ein besonders gereinigtes Leinöl darstellt. Durch Erhitzen und Zusatz von Bleicherde werden wurden bei Lackleinöl die Schleimstoffe weitestgehend entfernt. Dies verbessert die Sauerstoffaufnahme und erhöht die Trocknungsfähigkeit.

Wasser ist im Prinzip kein essentieller Bestandteil der erfindungsgemäßen Korrosionsschutzmittel-Formulierung und gelangt normalerweise, wenn überhaupt, nur zwangsläufig durch das Zusammenmischen von anderen wasserhaltigen Komponenten in die Formulierung. Enthält die erfindungsgemäße Korrosionsschutzmittel-Formulierung Wasser als Komponente (F), so kann dessen pH-Wert neutral, sauer oder basisch sein. Häufig wird der pH der Formulierung am Ende so eingestellt, dass er leicht basisch ist. Eine typische erfindungsgemäße Korrosionsschutzmittel-Formulierung hat einen pH-Wert von 7 bis 10, bevorzugt von 7,5 bis 9,5, insbesondere von 8 bis 9.

Falls erforderlich empfiehlt sich zur Bereitstellung der erfindungsgemäßen Korrosionsschutzmittel-Formulierung in Form einer homogenen Dispersion oder Mikroemulsion der Zusatz eines üblichen Emulgators als Komponente (G). Dieser Emulgator kann aus einer einzelnen Substanz oder aus einer Mischung mehrerer emulgierend wirkenden Substanzen bestehen. Die genaue Struktur dieser emulgierend wirkenden Substanzen ist für die Wirkungsweise der erfindungsgemäßen Korrosionsschutzmittel-Formulierung unerheblich; es muss nur sichergestellt sein, dass das Emulgatorsystem keine unerwünschte Wechselwirkung mit den anderen Komponenten der Formulierung und der zu schützenden metallischen Oberfläche eingeht. Geeignete Emulgatoren als Komponente (G) sind kommerziell erhältlich, insbesondere gut geeignet sind die Produkte der Emulgan®-Reihe der BASF SE.

Gegenstand der vorliegenden Erfindung ist auch ein Verfahren zum Schutz von Zink oder verzinkten Bauteilen oder Oberflächen oder von Cadmium oder cadmierten metallischen Oberflächen vor Korrosion, welches dadurch gekennzeichnet ist, dass man diese Substrate mit der erfindungsgemäßen Korrosionsschutzmittel-Formulierung behandelt.

Die erfindungsgemäße Korrosionsschutzmittel-Formulierung aus den in den genannten Mengen bestehenden Komponenten kann in dieser Form direkt zur Anwendung eingesetzt werden, braucht im Prinzip also nicht weiter verdünnt zu werden. Gewünschtenfalls kann jedoch - je nach Applikationsmethode und Auftragetechnik -weiter verdünnt werden, beispielsweise mit Wasser. Der Korrosionsschutz wird dadurch erreicht, dass auf den zu schützenden Oberflächen die Formulierung mechanisch oberflächlich in einem feinen Sprühvorgang - analog zum Unterbodenschutz und zur Hohlraumkonservierung bei Kraftfahrzeugen - aufgebracht wird. Die Applikation auf die zu schützenden Oberflächen kann über ein Drucksystem, beispielsweise einer Druckbecherpistole, erfolgen.

Da sich die vorliegende Erfindung insbesondere zum Korrosionsschutz bei Zink- und Cadmium-Bauteilen und -Oberflächen im Flughafenbetrieb eignet, ist auch Gegenstand der vorliegenden Erfindung ein Verfahren zum Schutz von Zink oder verzinkten Bauteilen oder Oberflächen oder von Cadmium oder cadmierten metallischen Oberflächen, vor allem an Winterdienstfahrzeugen auf Flughäfen und an Flugzeugen, vor Korrosion, welche durch auf Flughäfen eingesetzte Landebahnenteisungsmittel hervorgerufen wird, durch Behandlung mit der erfindungsgemäßen Korrosionsschutzmittel-Formu-lierung.

Die nachfolgenden Beispiele haben die Minimierung von durch nachgestellte Landebahnenteisungsmittel hervorgerufene Zinkkorrosion zum Gegenstand. Sie sollen die vorliegende Erfindung erläutern, ohne sie zu begrenzen.

### Beispiele: Zinkkorrosionstest mit feuerverzinkten Stahlblechen analog AMS 1435B

Die nachfolgend aufgeführte Korrosionsschutzmittel-Formulierung gemäß der Lehre der vorliegenden Erfindung wurde auf seine Korrosionsschutzwirkung hinsichtlich Korrosion von Zink mit feuerverzinkten Stahlblechen gegenüber jeweils 50 gew.-%igen wässrigen Kaliumacetat- und Kaliumformiatlösungen analog den Korrosionstests aus AMS 1435B (3.2.5.2 Total Immersion Corrosion) geprüft.

In AMS 1435B werden üblicherweise nur Prüfkörper aus dem Flugzeugbau (wie cadmiertes Magnesium oder Aluminiumlegierungen) verwendet. Bei den nachfolgenden Korrosionstests gegenüber Zink wurden die in der Norm beschriebenen Prüfkörper durch feuerverzinkte Stahlbleche, jedoch mit der identischen geometrischen Form, ersetzt.

Verwendete erfindungsgemäße Formulierung ("EF") [Zusammensetzung in Gew.-%]:

| | | |
|---|---|---|
| (A) | kommerziell erhältliches Octylaminethoxylat mit 2 Ethylenoxid-Einheiten | 0,90 |
| (B) | kommerziell erhältliches Rizinusölethoxylat (Leunapon® ER 40) | 0,30 |
| (B) | Isononansäure | 1,30 |
| (B) | Dodecandisäure | 0,50 |
| (B) | Natriumbenzoat | 0,50 |
| (B) | Phthalsäureanhydrid | 0,13 |
| (B) | Tolutriazol | 0,10 |
| | wässrige Kalilauge (48 gew.-%ig) | 1,64 |
| (C) | Polyacrylat-Verdicker (Lutexal® GP ECO) | 0,01 |
| (D) | Monopropylenglykol | 41,17 |
| (E) | Lackleinöl | 49,00 |
| (F) | Wasser | 2,44 |
| (G) | handelsüblicher Emulgator (Emulan® ELH 60) | 2,00 |
| | handelsüblicher Entschäumer | 0,01 |
| | Summe: | 100,00 |

### Versuch 1: Kaliumformiatlösung mit ungeschützten feuerverzinkten Stahlblechen

- Metall:: feuerverzinkte Stahlbleche (50 x 20 x 2 mm)
- Gefäß:: 100 ml-Glasflasche aus Duran®-Glas
- Testmedium:: feuerverzinktes Stahlblech ohne Oberflächenschutz (also nackt) in Kaliumformiatlösung (50 gew.-%ig, pH-Wert: 9-10)
- Test:: feuerverzinkte Stahlbleche (Prüfkörper) in Aceton reinigen, trocknen, wiegen (Dreifach-Bestimmung);
volleingetaucht in 100 ml der Kaliumformiatlösung; 7 Tage bei 40°C im Trockenschrank
- Auswertung:: Prüfkörper aus dem Testmedium entnehmen, mit Wasser abspülen, in Aceton reinigen, wiegen (Dreifach-Bestimmung)

| Masse vor Test [g] | Masse nach Test [g] | Δ Massenabtrag nach Test [mg] |
|---|---|---|
| 15,9543 | 15,8797 | 74,6 |
| 17,4241 | 17,3597 | 64,4 |
| 18,1169 | 18,0338 | 83,1 |

### Versuch 2: Kaliumacetatlösung mit ungeschützten feuerverzinkten Stahlblechen

- Metall:: feuerverzinkte Stahlbleche (50 x 20 x 2 mm)
- Gefäß:: 100 ml-Glasflasche aus Duran®-Glas
- Testmedium:: feuerverzinktes Stahlblech ohne Oberflächenschutz (also nackt) in Kaliumacetatlösung (50 gew.-%ig, pH-Wert: 9-10)
- Test:: feuerverzinkte Stahlbleche (Prüfkörper) in Aceton reinigen, trocknen, wiegen (Dreifach-Bestimmung);
volleingetaucht in 100 ml der Kaliumacetatlösung; 7 Tage bei 40°C im Trockenschrank
- Auswertung:: Prüfkörper aus dem Testmedium entnehmen, mit Wasser abspülen, in Aceton reinigen, wiegen (Dreifach-Bestimmung)

| Masse vor Test [g] | Masse nach Test [g] | Δ Massenabtrag nach Test [mg] |
|---|---|---|
| 17,6523 | 17,6134 | 38,9 |
| 17,9249 | 17,8647 | 60,2 |
| 18,1410 | 18,0930 | 48,0 |

- Versuch 3:: Kaliumformiatlösung mit geschützten feuerverzinkten Stahlblechen
- Metall:: feuerverzinkte Stahlbleche (50 x 20 x 2 mm)
- Gefäß:: 100 ml-Glasflasche aus Duran®-Glas
- Testmedium:: feuerverzinktes Stahlblech mit Oberflächenschutz (EF) in Kaliumformiatlösung (50 gew.-%ig, pH-Wert: 9-10)
- Test:: feuerverzinkte Stahlbleche (Prüfkörper) in Aceton reinigen, trocknen, wiegen (Dreifach-Bestimmung);
Prüfkörper eintauchen in EF, abtropfen lassen (1 Stunde) und trocken auf dem Uhrglas (1 Stunde);
volleingetaucht in 100 ml der Kaliumformiatlösung; 7 Tage bei 40°C im Trockenschrank
- Auswertung:: Prüfkörper aus dem Testmedium entnehmen, mit Wasser abspülen, in Aceton reinigen, wiegen (Dreifach-Bestimmung)

| Masse vor Test [g] | Masse nach Test [g] | Δ Massenabtrag nach Test [mg] |
|---|---|---|
| 17,5020 | 17,5005 | 1,5 |
| 17,8144 | 17,8087 | 5,7 |
| 17,9339 | 17,9297 | 4,2 |

- Versuch 4:: Kaliumacetatlösung mit geschützten feuerverzinkten Stahlblechen
- Metall:: feuerverzinkte Stahlbleche (50 x 20 x 2 mm)
- Gefäß:: 100 ml-Glasflasche aus Duran®-Glas
- Testmedium:: feuerverzinktes Stahlblech mit Oberflächenschutz (EF) in Kaliumacetatlösung (50 gew.-%ig, pH-Wert: 9-10)
- Test:: feuerverzinkte Stahlbleche (Prüfkörper) in Aceton reinigen, trocknen, wiegen (Dreifach-Bestimmung);
Prüfkörper eintauchen in EF, abtropfen lassen (1 Stunde) und trocken auf dem Uhrglas (1 Stunde);
volleingetaucht in 100 ml der Kaliumacetatlösung; 7 Tage bei 40°C im Trockenschrank
- Auswertung:: Prüfkörper aus dem Testmedium entnehmen, mit Wasser abspülen, in Aceton reinigen, wiegen (Dreifach-Bestimmung)

| Masse vor Test [g] | Masse nach Test [g] | Δ Massenabtrag nach Test [mg] |
|---|---|---|
| 17,7708 | 17,7688 | 2,0 |
| 17,6682 | 17,6652 | 2,0 |
| 17,2248 | 17,2223 | 2,5 |

Es zeigte sich, dass die Abtragswerte bei einer 50 gew.-%igen Kaliumformiatlösung etwas höher liegen als bei einer 50 gew.-%igen Kaliumacetatlösung.

Durch die erfindungsgemäße Formulierung (EF) konnte die Korrosionsrate am Zink sowohl bei 50 gew.-%iger wässrigen Kaliumacetat- und auch bei 50 gew.-%iger wässriger Kaliumformiatlösung dramatisch und völlig überraschend im Schnitt um den Faktor 20 reduziert werden.

## Patentansprüche

1. Korrosionsschutzmittel-Formulierung, enthaltend
(A) 0,01 bis 5 Gew.-% eines oder mehrerer Alkylaminethoxylate als Tensidkomponente,
(B) 0,01 bis 10 Gew.-% eines oder mehrerer Korrosionsinhibitoren,
(C) 0 bis 0,3 Gew.-% eines oder mehrerer Verdicker,
(D) 5 bis weniger als 75 Gew.-% eines oder mehrerer gefrierpunktserniedrigender Alkohole ausgewählt aus Alkanolen, Glykolen, Polyalkylenglykolen und Glycerin,
(E) 5 bis 90 Gew.-% eines oder mehrerer pflanzlicher und/oder fetter Öle,
(F) 0 bis 5 Gew.-% Wasser und
(G) 0 bis 5 Gew.-% eines üblichen Emulgators,
wobei es sich bei Komponente (B) um mindestens ein Rizinusölethoxylat oder eine Mischung aus wenigstens einem Rizinusölethoxylat und wenigstens einem weiteren Korrosionsinhibitor auf Basis organischer Carbonsäuren und/oder heterocyclischer Verbindungen handelt.

2. Korrosionsschutzmittel-Formulierung nach Anspruch 1, enthaltend als Komponente (A) mindestens ein Alkylaminethoxylat, welches wenigstens einen C₃- bis C₂₀-Alkylrest enthält.

3. Korrosionsschutzmittel-Formulierung nach Anspruch 1 oder 2, enthaltend als Komponente (A) mindestens ein Alkylaminethoxylat, welches 1 bis 35 Ethylenoxid-Einheiten enthält.

4. Korrosionsschutzmittel-Formulierung nach den Ansprüchen 1 bis 3, enthaltend als Komponente (A) mindestens ein Alkylaminethoxylat, welches wenigstens einen linearen C₇- bis C₁₂-Alkylrest und 1,8 bis 9 Ethylenoxid-Einheiten enthält.

5. Korrosionsschutzmittel-Formulierung nach den Ansprüchen 1 bis 4, enthaltend als Komponente (C) mindestens ein Polyacrylat.

6. Korrosionsschutzmittel-Formulierung nach den Ansprüchen 1 bis 5, enthaltend als Komponente (D) Monopropylenglykol oder eine Mischung aus Monopropylenglykol und einem oder mehreren anderen gefrierpunktserniedrigenden Alkoholen ausgewählt aus Alkanolen, Glykolen, Polyalkylenglykolen und Glycerin.

7. Korrosionsschutzmittel-Formulierung nach den Ansprüchen 1 bis 6, enthaltend als Komponente (E) Leinöl.

8. Verfahren zum Schutz von Zink oder verzinkten Bauteilen oder Oberflächen oder von Cadmium oder cadmierten metallischen Oberflächen vor Korrosion, **dadurch gekennzeichnet, dass** man diese Substrate mit der Korrosionsschutzmittel-Formulierung gemäß den Ansprüchen 1 bis 7 behandelt.

9. Verfahren nach Anspruch 8 zum Schutz von Zink oder verzinkten Bauteilen oder Oberflächen oder von Cadmium oder cadmierten metallischen Oberflächen vor Korrosion, welche durch auf Flughäfen eingesetzte Landebahnenteisungsmittel hervorgerufen wird.

## Claims

1. A corrosion protection formulation comprising
(A) from 0.01 to 5% by weight of one or more alkylamine ethoxylates as surfactant component,
(B) from 0.01 to 10% by weight of one or more corrosion inhibitors,
(C) from 0 to 0.3% by weight of one or more thickeners,
(D) from 5 to < 75% by weight of one or more freezing point-lowering alcohols selected from among alkanols, glycols, polyalkylene glycols and glycerol,
(E) from 5 to 90% by weight of one or more vegetable and/or fatty oils,
(F) from 0 to 5% by weight of water and
(G) from 0 to 5% by weight of a conventional emulsifier,
wherein component (B) is at least one castor oil ethoxylate or a mixture of at least one castor oil ethoxylate and at least one further corrosion inhibitor based on organic carboxylic acids and/or heterocyclic compounds.

2. The corrosion protection formulation according to claim 1 comprising at least one alkylamine ethoxylate comprising at least one C₃-C₂₀-alkyl radical as component (A).

3. The corrosion protection formulation according to claim 1 or 2 comprising at least one alkylamine ethoxylate comprising from 1 to 35 ethylene oxide units as component (A).

4. The corrosion protection formulation according to any of claims 1 to 3 comprising at least one alkylamine ethoxylate which comprises at least one linear C₇-C₁₂-alkyl radical and from 1.8 to 9 ethylene oxide units as component (A).

5. The corrosion protection formulation according to any of claims 1 to 4 comprising at least one polyacrylate as component (C).

6. The corrosion protection formulation according to any of claims 1 to 5 comprising monopropylene glycol or a mixture of monopropylene glycol and one or more other freezing point-lowering alcohols selected from among alkanols, glycols, polyalkylene glycols and glycerol as component (D).

7. The corrosion protection formulation according to any of claims 1 to 6 comprising linseed oil as component (E).

8. A method of protecting zinc or zinc-plated components or surfaces or cadmium or cadmium-plated metallic surfaces against corrosion, wherein these substrates are treated with the corrosion protection formulation according to any of claims 1 to 7.

9. The method according to claim 8 for protecting zinc or zinc-plated components or surfaces or cadmium or cadmium-plated metallic surfaces against corrosion caused by runway deicing compositions used at airports.

## Revendications

1. Formulation d'agent antirouille, contenant
(A) 0,01 à 5% en poids d'un ou de plusieurs éthoxylates d'alkylamine comme composant tensioactif,
(B) 0,01 à 10% en poids d'un ou de plusieurs inhibiteurs de corrosion,
(C) 0 à 0,3% en poids d'un ou de plusieurs épaississants,
(D) 5 à moins de 75% en poids d'un ou de plusieurs alcools abaissant le point de congélation, choisis parmi les alcanols, les glycols, les polyalkylèneglycols et le glycérol,
(E) 5 à 90% en poids d'une ou de plusieurs huiles végétales et/ou grasses,
(F) 0 à 5% en poids d'eau et
(G) 0 à 5% en poids d'un émulsifiant usuel,
le composant (B) étant au moins un éthoxylate d'huile de ricin ou un mélange d'au moins un éthoxylate d'huile de ricin et d'au moins un autre inhibiteur de corrosion à base d'acides carboxyliques organiques et/ou de composés hétérocycliques organiques.

2. Formulation d'agent antirouille selon la revendication 1, contenant, comme composant (A), au moins un éthoxylate d'alkylamine, qui contient au moins un radical alkyle en C₃-C₂₀.

3. Formulation d'agent antirouille selon la revendication 1 ou 2, contenant, comme composant (A), au moins un éthoxylate d'alkylamine, qui contient 1 à 35 unités d'oxyde d'éthylène.

4. Formulation d'agent antirouille selon les revendications 1 à 3, contenant, comme composant (A), au moins un éthoxylate d'alkylamine, qui contient au moins un radical alkyle linéaire en C₇-C₁₂ et 1, 8 à 9 unités d'oxyde d'éthylène.

5. Formulation d'agent antirouille selon les revendications 1 à 4, contenant, comme composant (C), au moins un polyacrylate.

6. Formulation d'agent antirouille selon les revendications 1 à 5, contenant, comme composant (D), du monopropylèneglycol ou un mélange de monopropylèneglycol et d'un ou de plusieurs autres alcools abaissant le point de congélation, choisis parmi les alcanols, les glycols, les polyalkylèneglycols et le glycérol.

7. Formulation d'agent antirouille selon les revendications 1 à 6, contenant, comme composant (E), de l'huile de lin.

8. Procédé pour la protection de zinc ou de pièces ou de surfaces zinguées ou de cadmium ou de surfaces métalliques revêtues de cadmium contre la corrosion, **caractérisé en ce qu'**on traite ces substrats par la formulation d'agent antirouille selon les revendications 1 à 7.

9. Procédé selon la revendication 8 pour la protection de zinc ou de pièces ou de surfaces zinguées ou de cadmium ou de surfaces métalliques revêtues de cadmium contre la corrosion, qui est provoquée par les agents de dégivrage de piste d'atterrissage utilisés dans les aéroports.
